# EUROPEAN PATENT SPECIFICATION

(11) **EP 3 678 941 B1**
(45) Date of publication and mention of the grant of the patent: **03.11.2021**
(21) Application number: 18782510.4
(22) Date of filing: 06.09.2018
(51) Int. Cl.: B65B 19/04, B65B 57/14, B65B 35/44, B65B 35/32, B65G 15/14, A24C 5/35, A24C 5/32

(54) **HOPPER FOR SMOKING ARTICLES**
TRICHTER FÜR RAUCHARTIKEL
TRÉMIE POUR ARTICLES À FUMER

(30) Priority: 06.09.2017 IT 201700099649
(43) Date of publication of application: 15.07.2020
(73) Proprietor: G.D Società per Azioni, 40133 Bologna (IT)
(72) Inventor: FORTINI, Massimo, 40057 Granarolo Emilia (BO) (IT); VILLA, Stefano, 40064 Ozzano Emilia (BO) (IT); FEDERICI, Luca, deceased (IT)
(74) Representative: Maccagnan, Matteo
(86) International application number: PCT/IB2018/056800
(87) International publication number: WO 2019/049058

(56) References cited:
- WO-A1-2017/051296
- US-A- 4 344 520
- US-A- 4 365 703
- US-A1- 2004 104 240

## Description

### TECHNICAL FIELD

The invention belongs to the technical field of the production of packs for smoking articles. In detail, the invention relates to a hopper for smoking articles.

### PRIOR ART

As it is known, in the production of packs for smoking articles, for example cigarettes, hoppers are used to arrange masses of smoking articles so that they can be inserted, in groups or rows, into packaging material used to manufacture a pack.

A known hopper has a mainly vertical extension and comprises: an inlet portion for letting smoking articles, arranged in disorderly masses, into the hopper; a plurality of exiting mouths, each comprising, in turn, a plurality of ducts (or small channels) for letting the smoking articles out of the hopper (with the aid of suitable extracting means), and a connection area, which connects the inlet portion to the exiting mouths and is delimited by lateral walls coming into contact with the smoking articles during their exiting path.

A currently more and more pressing issue for manufacturers is that of increasing the productivity of machines for producing packs for smoking articles. Therefore, in hoppers, both the number of exiting mouths and the speed at which the smoking articled are fed to the exiting mouths have been increased. However, the aforesaid measures often cause, in known hoppers of the type described above, blockages, namely undesired obstructions of one or more exiting mouths. These obstructions are caused by an incorrect positioning or orientation of one or more smoking articles, which, during the high-speed downward movement, causes the blockage of the ducts of the exiting mouths or, anyway, slows down the downward movement of the smoking articles.

The blockage or slowing down of an exiting mouth leads, in a chain reaction, to the blockage of all the other exiting mouths, since the connection area, which is shared by all the exiting mouths, is progressively subjected to a complete obstruction. This causes standstill times of the machine, which are clearly associated with high costs.

Patent application WO02083502A1 (corresponding to patent application US2004104240A1) is the closest prior art and describes a hopper for a cigarette packaging machine, wherein two mirror-like channels are provided, each having a pair of opposed lateral walls, which come into contact with cylindrical lateral walls of the cigarettes; in each channel there is a belt conveyor, which makes up one single lateral wall of the channel.

Patent US4365703A1 represents the closest prior art and discloses an apparatus for handling and storing rod-like smoking articles (such as cigarettes or cigarette filter rods) and incorporating a buffer reservoir system using trolleys having vertical compartments for storing the articles in stack formation.

### DESCRIPTION OF THE INVENTION

The object of the invention is to overcome the aforesaid drawbacks.

In order to do so, the invention offers a hopper for smoking articles according to the appended claims.

Advantageously, the hopper for smoking articles according to the invention avoids undesired obstructions, thus ensuring a high productivity even in the presence of many exiting mouths.

### BRIEF DESCRIPTION OF THE DRAWING

Other advantages will be best understood upon perusal of the following description, with reference to the accompanying drawing, wherein:

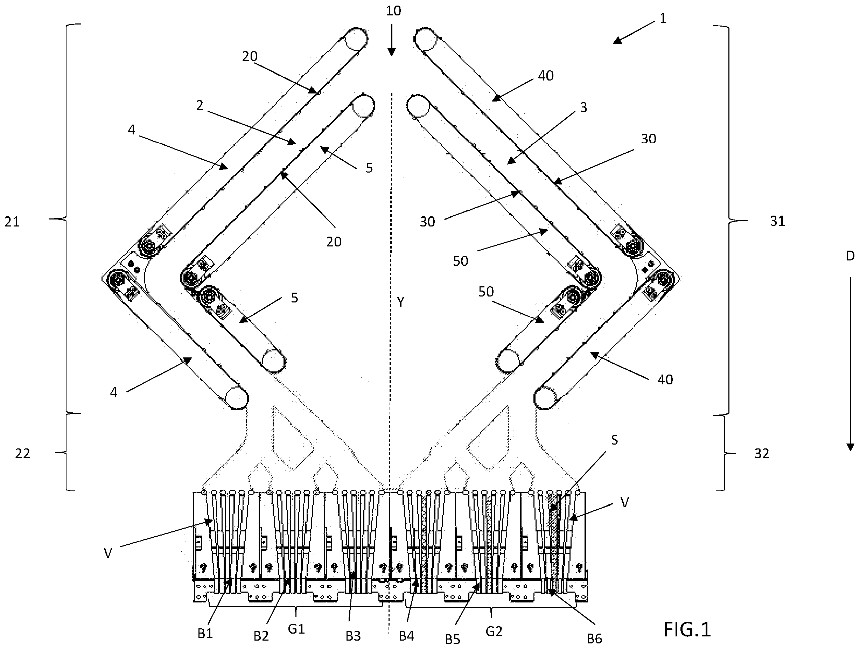

- figure 1 is a schematic front view of a hopper for smoking articles according to the invention.

### PREFERRED EMBODIMENTS OF THE INVENTION

With reference to the accompanying figure, number 1 indicates a hopper for smoking articles according to the invention. With reference to the figure, the hopper 1 has a mainly vertical extension.

The hopper 1 comprises: an inlet portion 10 for letting smoking articles S (arranged in disorderly masses) into the hopper 1; at least a first exiting group G1, which comprises, in turn, at least two first exiting mouths B1, B2, B3, each comprising a plurality of ducts V (or small channels) for letting the smoking articles S out of the hopper 1 (by means of suitable extracting means, which are not shown herein).

The hopper 1 further comprises at least a second exiting group (G2), which is arranged beside the first exiting group G1 and comprises, in turn, at least two second exiting mouths B4, B5, B6, each comprising a plurality of ducts (or small channels) for letting the smoking articles S out of the hopper 1 (by means of suitable extracting means, which are not shown herein).

There is one single inlet channel for letting one single type of smoking articles S into the hopper 1; said (one) single inlet channel ends in the inlet portion 10. In other words, the single inlet channel and, hence, the inlet portion 10 (which is the one and only inlet to the hopper 1) let into the hopper 1 one single type of smoking articles S.

In particular, the hopper 1 comprises a first connection channel 2, which exclusively connects the inlet portion 10 to the first exiting group G1 so as to exclusively feed smoking articles S to the first exiting group G1 (namely, to the first exiting mouths B1, B2, B3).

The hopper 1 further comprises a second connection channel 3, which is separate from the first connection channel 2 and exclusively connects the same inlet portion 10 to the second exiting group G2 so as to exclusively feed smoking articles S to the second exiting group G2 (namely, to the second exiting mouths B4, B5, B6). In other words, the second connection channel 3 does not communicate with the first connection channel 2, except for the inlet portion 10, i.e. the second connection channel 3 does in no way communicate with the first connection channel 2 downstream of the inlet portion 10.

The inlet portion 10 receives the smoking articles S from the inlet channel and divides the smoking articles S into two distinct and separate flows, each consisting of the same type of smoking articles S: a first flow of smoking articles S coming from the first inlet portion 10 is fed to the first connection channel 2 and a second flow of smoking articles S coming from the inlet portion 10 is fed to the second connection channel 3 (which is separate from the first connection channel 2). In other words, the first connection channel 2 receives the first flow of smoking articles from the inlet portion 10 and exclusively connects the inlet portion 10 to the first exiting group G1 so as to exclusively supply the first exiting group G1 with smoking articles S of the first flow, and the second connection channel 3 is separate from the first connection channel 2, receives the second flow of smoking articles S from the inlet portion 10 and exclusively connects the inlet portion 10 to the second exiting group G2 so as to exclusively supply the second exiting group G2 with the smoking articles S of the second flow.

Advantageously, the fact that the first connection channel 2 exclusively feeds smoking articles S to the first exiting group G1 and, independently, the second connection channel 3 exclusively feeds smoking articles S to the second exiting group G2 ensures a high productivity, this avoiding undesired obstructions of the exiting mouths B1, B2, B3, B4, B5, B6. In this way, indeed, the first exiting group G1 and the second exiting group G2 are completely independent of one another, as if they were two systems arranged in parallel. As a consequence, first of all, the speed at which the smoking articles S are fed from the inlet portion 10 to the exiting mouths B1, B2, B3, B4, B5, B6 can be significantly reduced, preferably cut by half, compared to prior art hoppers, so as to obtain the same levels of productivity within a given amount of time (and avoiding the obstructions due, in the prior art, to the excessively high speed of the smoking articles S).

Secondly, in the highly unlikely case that there were an obstruction or a slowing down of an exiting mouth B1, B2, B3, B4, B5, B6, this would not jeopardize the entire productivity of the hopper 1 (which was the case in the prior art), but would only affect the productivity of one single exiting group G1, G2.

With reference to the accompanying figure, the first connection channel 2 and the second connection channel 3 each comprise a pair of opposed lateral walls 20, 30, which come into contact with the smoking articles S during the relative exiting path, in an exiting direction D, from the top to the bottom.

The first connection channel 2 and the second connection channel 3 each comprise a first tract 21, 31 and a second tract 22, 32. With reference to figure 1, the first tract 21, 31 and the second tract 22, 32 are adjacent to one another and consecutive.

In detail, the second tract 22, 32 of each channel 2, 3 is interposed between the corresponding first tract 21, 31 and the corresponding exiting group G1, G2 (whereas the first tract 21, 31 of each channel 2, 3 is interposed between the inlet portion 10 and the corresponding second tract 22, 32). In other words, the second tract 22, 32 is arranged downstream of the first tract 21, 31, taking into account the exiting direction D in which the smoking articles S are led from the inlet portion 10 towards the respective exiting mouths B1, B2, B3, B4, B5, B6. The lateral walls 20, 30 of the first connection channel 2 and of the second connection channel 3 delimit the path of the smoking articles S exclusively to the respective exiting group G1, G2.

The first connection channel 2 and the second connection channel 3 each comprise at least a pair of belt conveyors 4, 5, 40, 50, which are opposed to one another and make up, for each channel 2, 3, the side walls 20, 30 of the respective first tract 21, 31.

Advantageously, with the operation of the belt conveyors 4, 5, 40, 50, the feeding of the smoking articles S to the exiting mouths B1, B2, B3, B4, B5, B6 of the hopper 1 turns out to be particularly controlled, further avoiding a possible incorrect orientation or "cross arrangement" of the smoking articles S. With reference to figure 1, the belt conveyors 4, 5, 40, 50 are closed-ring conveyors. Hence, each first tract 21, 31 of the lateral walls 20, 30 of the first connection channel 2 and of the second connection channel 3 are defined by a branch of a respective closed-ring conveyor 4, 5, 40, 50.

In detail, when the hopper 1 is in use, the belt conveyors 4, 5, 40, 50 are fed (i.e. operated) so as to move in the same direction as the smoking articles S during their path in the exiting direction D from the inlet portion 10 towards the exiting mouths B1, B2, B3, B4, B5, B6. In other words, the belt conveyors 4, 5, 40, 50 are fed with a speed corresponding to the feeding speed of the smoking articles S moving inside the first tract 21, 31 of the respective first 2 and second 3 channel.

Preferably, during the use, the belt conveyors 4, 5, 40, 50 are fed at the same speed as the smoking articles S, so as to move in synchronous with the smoking articles S. By so doing, the downward movement of the smoking articles S is eve more controlled.

For example, each connection channel, i.e. the first one 2 and the second one 3, comprises two belt conveyors 4, 5, 40, 50 (of the type described above), which can be operated in a conveying direction and are arranged upstream and downstream, respectively, of the path of the smoking articles S from the inlet portion 10 towards the respective exiting mouths B1, B2, B3, B4, B5, B6 (for example inclined relative to one another, preferably by 45°, see in detail figure 1). This solution allows for a better management of hoppers with large-sized connection portions.

According to the preferred embodiment shown herein, the first connection channel 2 and the second connection channel 3, in the area of the relative second tract 22, 32, branch off so as to direct the smoking articles S towards each exiting mouth B1, B2, B3, B4, B5, B6 of the corresponding exiting group G1, G2. In other words, each channel 2, 3, splits up "like a delta" in proximity to the corresponding exiting mouths B1, B2, B3, B4, B5, B6, namely it originates further auxiliary channels. Advantageously, by so doing, the risk of a possible obstruction of an exiting mouth is further reduced. Preferably, each channel 2, 3 (and/or the respective auxiliary channels) has a cross section with the shape of an "upside-down funnel", which increases in the area of the relative exiting mouths B1, B2, B3, B4, B5, B6.

With reference to figure 1, again, the first exiting group G1 comprises three first exiting mouths B 1, B2, B3 (i.e. the first connection channel 2 connects the inlet portion 10 to three first exiting mouths B1, B2, B3), and the second exiting group G2 comprises three second exiting mouths B4, B5, B6 (i.e. the second connection channel 3 connects the inlet portion 10 to three second exiting mouths B4, B5, B6). Clearly, a larger number of exiting mouths can be provided for each exiting group.

With reference to figure 1, the first connection channel 2 and the second connection channel 3 are inclined with respect to a vertical longitudinal axis Y of the hopper 1 (preferably inclined by 45°). In this way, the smoking articles S move in a more controlled manner along the connection channels.

With reference to accompanying figure, again, the first connection channel 2 and the second connection channel 3 are arranged in a mirror-like manner with respect to the aforesaid vertical longitudinal axis Y, namely they are arranged on the right and on the left of the aforesaid axis Y.

The hopper 1 further comprises first sensor means (not shown), which are associated with the first connection channel 2 so as to detect an accumulation of smoking articles S in the first connection channel 2 (preferably in the second tract 22 of the first connection channel 2, with reference to what described above).

The hopper 1 further comprises second sensor means (also not shown), which are associated with the second connection channel 3 so as to detect an accumulation of smoking articles S in the second connection channel 3 (preferably in the second tract 32 of the second connection channel 3, with reference to what described above).

The first sensor means and the second sensor means (which comprise, for instance, optical means) can coincide with or be physically distinct from one another. Furthermore, the hopper 1 comprises at least a control unit (also not shown), which is connected to the first sensor means and to the second sensor means so as to control and adjust (in feedback) the feeding of the smoking articles S in the first connection channel 2 and/or in the second connection channel 3 in an independent manner, based on the possible accumulation detected in the first connection channel 2 and/or in the second connection channel 3.

Advantageously, this completely eliminates the possibility of an undesired obstruction of one of the exiting mouths B1, B2, B3, B4, B5, B6. Indeed, the first sensor means and the second sensor means detect possible accumulations of smoking articles S building up in the first connection channel 2 and/or in the second connection channel 3 and adjust accordingly, in an independent manner, the feeding of the smoking articles S in the two channels 2, 3.

The control unit controls and adjusts the operation, namely the moving speed of the belt conveyors 4, 5, 40, 50.

## Claims

1. A hopper (1) for smoking articles (S), comprising:
one single inlet channel for letting one single type of smoking articles (S) into the hopper (1);
an inlet portion (10), which receives the smoking articles (S) from the inlet channel and divides the smoking articles (S) into two distinct and separate flows, each consisting of the same type of smoking articles (S);
at least a first exiting group (G1) comprising at least two first exiting mouths (B1, B2, B3), each first exiting mouth (B1, B2, B3) having a plurality of ducts (V) for allowing the exit of the smoking articles (S) from the hopper (1);
at least a second exiting group (G2) which is flanked to the first exiting group (G1) and which comprises at least two second exiting mouths (B4, B5, B6), each second exiting mouth (B4, B5, B6) having a plurality of ducts (V) for allowing the exit of the smoking articles (S) from the hopper (1);
a first connection channel (2), which receives a first flow of smoking articles (S) from the inlet portion (10);
a second connection channel (3), which is detached from the first connection channel (2) and receives a second flow of smoking articles (S) from the inlet portion (10);
wherein the first connection channel (2) exclusively connects the inlet portion (10) to the first exiting group (G1) so as to exclusively supply the first exiting group (G1) with the smoking articles (S) of the first flow;
wherein the second connection channel (3) exclusively connects the inlet portion (10) to the second exiting group (G2) so as to exclusively supply the second exiting group (G2) with the smoking articles (S) of the second flow;
wherein each of the first connection channel (2) and the second connection channel (3) comprises two opposed lateral walls (20, 30), against which the smoking articles (S) abut in their path from the inlet portion (10) towards the exiting mouths (B1, B2, B3, B4, B5, B6); and
wherein each connection channel, first (2) and second (3), having a first tract (21, 31) and a second tract (22, 32), the latter being positioned between the corresponding first tract (21, 31) and the corresponding exiting group (G1, G2);
the hopper (1) is **characterized in that:**
each connection channel (2, 3) comprising at least two belt conveyors (4, 5, 40, 50), opposed each other, forming the lateral walls (20, 30) of the first tract (21, 31) of each connection channel (2, 3);
there are provided first sensor means, associated to the first connecting channel (2), for sensing a smoking articles (S) accumulation in the first connection channel (2);
there are provided second sensor means, associated to the second connecting channel (3), for sensing a smoking articles (S) accumulation in the second connection channel (3);
it is provided at least a control unit, connected to the first sensor means and to the second sensor means, and able to driving and adjusting the smoking articles (S) feeding independently in the first connection channel (2) and in the second connecting channel (3), on the basis of a smoking articles (S) accumulation sensed in the first connection channel (2) and/or in the second connecting channel (3); and
the control unit drives and adjusts the belt conveyors (4, 5, 40, 50) of the first tract (21) of the first connection channel (2) and of the first tract (31) of the second connecting channel (3).

2. The hopper (1) of the preceding claim, wherein the first connection channel (2) and the second connection channel (3) branch off at their corresponding second tract (22, 32), for addressing the smoking articles (S) towards each exiting mouth (B1, B2, B3, B4, B5, B6) of the corresponding exiting group (G1, G2).

3. The hopper (1) of anyone of the preceding claims, in which the first exiting group (G1) comprises three first exiting mouths (B1, B2, B3), and the second exiting group (G2) comprises three second exiting mouths (B4, B5, B6).

4. The hopper (1) of anyone of the preceding claims, in which the first connecting channel (2) and the second connecting channel (3) are inclined with respect to a vertical longitudinal axis (Y) of the same hopper (1).

5. The hopper (1) of anyone of the preceding claims, , wherein the first sensor means and the second sensor means comprise optical means.

## Patentansprüche

1. Beschickungsvorrichtung (1) für Rauchartikel (S), umfassend:
einen einzelnen Einlasskanal zum Einlassen eines einzelnen Typs von Rauchartikeln (S) in die Beschickungsvorrichtung (1);
einen Einlassabschnitt (10), der die Rauchartikel (S) von dem Einlasskanal aufnimmt und die Rauchartikel (S) in zwei verschiedene und getrennte Ströme teilt, wovon jeder aus demselben Typ Rauchartikel (S) besteht;
mindestens eine erste Auslassgruppe (G1), die mindestens zwei erste Auslassmündungen (B1, B2, B3) umfasst, wobei jede erste Auslassmündung (B1, B2, B3) mehrere Kanäle (V) aufweist, um den Auslass der Rauchartikel (S) aus der Beschickungsvorrichtung (1) zu erlauben;
mindestens eine zweite Auslassgruppe (G2), die an die erste Auslassgruppe (G1) grenzt und die mindestens zwei zweite Auslassmündungen (B4, B5, B6) umfasst, wobei jede zweite Auslassmündung (B4, B5, B6) mehrere Kanäle (V) aufweist, um den Auslass der Rauchartikel (S) aus der Beschickungsvorrichtung (1) zu erlauben;
einen ersten Verbindungskanal (2), der einen ersten Strom von Rauchartikeln (S) von dem Einlassabschnitt (10) aufnimmt;
einen zweiten Verbindungskanal (3), der von dem ersten Verbindungskanal (2) getrennt ist und einen zweiten Strom von Rauchartikeln (S) von dem Einlassabschnitt (10) aufnimmt;
wobei der erste Verbindungskanal (2) den Einlassabschnitt (10) ausschließlich mit der ersten Auslassgruppe (G1) verbindet, um ausschließlich die erste Auslassgruppe (G1) mit den Rauchartikeln (S) des ersten Stroms zu beliefern;
wobei der zweite Verbindungskanal (3) den Einlassabschnitt (10) ausschließlich mit der zweiten Auslassgruppe (G2) verbindet, um ausschließlich die zweite Auslassgruppe (G2) mit den Rauchartikeln (S) des zweiten Stroms zu beliefern;
wobei der erste Verbindungskanal (2) und der zweite Verbindungskanal (3) jeweils zwei gegenüberliegende Seitenwände (20, 30) umfassen, gegen die die Rauchartikel (S) auf ihrem Weg von dem Einlassabschnitt (10) zu den Auslassmündungen (B1, B2, B3, B4, B5, B6) anstoßen, und
wobei jeder Verbindungskanal, der erste (2) und der zweite (3), einen ersten Trakt (21, 31) und einen zweiten Trakt (22, 32) aufweist, wobei letzterer zwischen dem entsprechenden ersten Trakt (21, 31) und der entsprechenden Auslassgruppe (G1, G2) angeordnet ist;
wobei die Beschickungsvorrichtung (1) **dadurch gekennzeichnet ist, dass**:
jeder Verbindungskanal (2, 3) mindestens zwei Bandförderer (4, 5, 40, 50), die einander gegenüberliegen, umfasst, die die Seitenwände (20, 30) des ersten Trakts (21, 31) jedes Verbindungskanals (2, 3) bilden;
erste Sensormittel vorgesehen sind, die dem ersten Verbindungskanal (2) zugeordnet sind, um eine Ansammlung von Rauchartikeln (S) in dem ersten Verbindungskanal (2) zu erfassen;
zweite Sensormittel vorgesehen sind, die dem zweiten Verbindungskanal (3) zugeordnet sind, um eine Ansammlung von Rauchartikeln (S) in dem zweiten Verbindungskanal (3) zu erfassen;
mindestens eine Steuereinheit vorgesehen ist, die mit den ersten Sensormitteln und mit den zweiten Sensormitteln verbunden ist und in der Lage ist, das Zuführen der Rauchartikel (S) in den ersten Verbindungskanal (2) und in den zweiten Verbindungskanal (3) unabhängig voneinander auf der Basis einer in dem ersten Verbindungskanal (2) und/oder in dem zweiten Verbindungskanal (3) erfassten Ansammlung von Rauchartikeln (S) anzutreiben und einzustellen, und
die Steuereinheit die Bandförderer (4, 5, 40, 50) des ersten Trakts (21) des ersten Verbindungskanals (2) und des ersten Trakts (31) des zweiten Verbindungskanals (3) antreibt und einstellt.

2. Beschickungsvorrichtung (1) nach dem vorhergehenden Anspruch, wobei sich der erste Verbindungskanal (2) und der zweite Verbindungskanal (3) in ihrem entsprechenden zweiten Trakt (22, 32) verzweigen, um die Rauchartikel (S) zu den jeweiligen Auslassmündungen (B1, B2, B3, B4, B5, B6) der entsprechenden Auslassgruppe (G1, G2) zu richten.

3. Beschickungsvorrichtung (1) nach einem der vorhergehenden Ansprüche, in der die erste Auslassgruppe (G1) drei erste Auslassmündungen (B1, B2, B3) umfasst und die zweite Auslassgruppe (G2) drei zweite Auslassmündungen (B4, B5, B6) umfasst.

4. Beschickungsvorrichtung (1) nach einem der vorhergehenden Ansprüche, in der der erste Verbindungskanal (2) und der zweite Verbindungskanal (3) in Bezug auf eine vertikale Längsachse (Y) derselben Beschickungsvorrichtung (1) geneigt sind.

5. Beschickungsvorrichtung (1) nach einem der vorhergehenden Ansprüche, wobei die ersten Sensormittel und die zweiten Sensormittel optische Mittel umfassen.

## Revendications

1. Trémie (1) pour articles à fumer (S), comprenant :
un canal d'entrée unique destiné à admettre un type unique d'articles à fumer (S) dans la trémie (1) ;
une portion d'entrée (10), qui reçoit les articles à fumer (S) depuis le canal d'entrée et divise les articles à fumer (S) en deux flux distincts et séparés, chacun étant constitué du même type d'articles à fumer (S) ;
au moins un premier groupe de sortie (G1) comprenant au moins deux premières embouchures de sortie (B1, B2, B3), chaque première embouchure de sortie (B1, B2, B3) ayant une pluralité de conduits (V) destinés à permettre la sortie des articles à fumer (S) de la trémie (1) ;
au moins un deuxième groupe de sortie (G2) qui est disposé à côté du premier groupe de sortie (G1) et qui comprend au moins deux deuxièmes embouchures de sortie (B4, B5, B6), chaque deuxième embouchure de sortie (B4, B5, B6) ayant une pluralité de conduits (V) destinés à permettre la sortie des articles à fumer (S) de la trémie (1) ;
un premier canal de raccordement (2), qui reçoit un premier flux d'articles à fumer (S) depuis la portion d'entrée (10) ;
un deuxième canal de raccordement (3), qui est détaché du premier canal de raccordement (2) et reçoit un deuxième flux d'articles à fumer (S) depuis la portion d'entrée (10) ;
dans laquelle le premier canal de raccordement (2) raccorde exclusivement la portion d'entrée (10) au premier groupe de sortie (G1) de façon à fournir exclusivement au premier groupe de sortie (G1) les articles à fumer (S) du premier flux ;
dans laquelle le deuxième canal de raccordement (3) raccorde exclusivement la portion d'entrée (10) au deuxième groupe de sortie (G2) de façon à fournir exclusivement au deuxième groupe de sortie (G2) les articles à fumer (S) du deuxième flux;
dans laquelle chacun du premier canal de raccordement (2) et du deuxième canal de raccordement (3) comprend deux parois latérales (20, 30) opposées, contre lesquelles les articles à fumer (S) butent sur leur trajet de la portion d'entrée (10) vers les embouchures de sortie (B1, B2, B3, B4, B5, B6) ; et
dans laquelle chaque canal de raccordement, le premier (2) et le deuxième (3), ont une première voie (21, 31) et une deuxième voie (22, 32), cette dernière étant positionnée entre la première voie (21, 31) correspondante et le groupe de sortie (G1, G2) correspondant ;
la trémie (1) est **caractérisée en ce que** :
chaque canal de raccordement (2, 3) comprend au moins deux convoyeurs à courroie (4, 5, 40, 50), opposés l'un à l'autre, formant les parois latérales (20, 30) de la première voie (21, 31) de chaque canal de raccordement (2, 3) ;
des premiers moyens de capteur sont prévus, associés au premier canal de raccordement (2), pour détecter une accumulation d'articles à fumer (S) dans le premier canal de raccordement (2) ;
des deuxièmes moyens de capteur sont prévus, associés au deuxième canal de raccordement (3), pour détecter une accumulation d'articles à fumer (S) dans le deuxième canal de raccordement (3) ;
au moins une unité de commande est prévue, raccordée aux premiers moyens de capteur et aux deuxièmes moyens de capteur, et capable d'entraîner et d'ajuster les articles à fumer (S) apportés indépendamment dans le premier canal de raccordement (2) et dans le deuxième canal de raccordement (3), sur la base d'une accumulation d'articles à fumer (S) détectée dans le premier canal de raccordement (2) et/ou dans le deuxième canal de raccordement (3) ; et
l'unité de commande entraîne et ajuste les convoyeurs à courroie (4, 5, 40, 50) de la première voie (21) du premier canal de raccordement (2) et de la première voie (31) du deuxième canal de raccordement (3).

2. Trémie (1) selon la revendication précédente, dans laquelle le premier canal de raccordement (2) et le deuxième canal de raccordement (3) bifurquent au niveau de leur deuxième voie (22, 32) correspondante, pour adresser les articles à fumer (S) vers chaque embouchure de sortie (B1, B2, B3, B4, B5, B6) du groupe de sortie (G1, G2) correspondant.

3. Trémie (1) selon l'une quelconque des revendications précédentes, dans laquelle le premier groupe de sortie (G1) comprend trois premières embouchures de sortie (B1, B2, B3), et le deuxième groupe de sortie (G2) comprend trois deuxièmes embouchures de sortie (B4, B5, B6).

4. Trémie (1) selon l'une quelconque des revendications précédentes, dans laquelle le premier canal de raccordement (2) et le deuxième canal de raccordement (3) sont inclinés vis-à-vis d'un axe longitudinal vertical (Y) de cette même trémie (1).

5. Trémie (1) selon l'une quelconque des revendications précédentes, dans laquelle les premiers moyens de capteur et les deuxièmes moyens de capteur comprennent des moyens optiques.
